# EUROPÄISCHE PATENTSCHRIFT

(11) **EP 2 923 970 B1**
(45) Veröffentlichungstag und Bekanntmachung des Hinweises auf die Patenterteilung: **24.08.2016**
(21) Anmeldenummer: 15159343.1
(22) Anmeldetag: 17.03.2015
(51) Int. Cl.: B65G 1/04

(54) **REGALBEDIENGERÄT FÜR EIN REGALLAGER, REGALLAGER MIT EINEM DERARTIGEN REGALBEDIENGERÄT SOWIE VERFAHREN ZUM EIN-/AUSLAGERN VON KLEIDERSTANGEN IN EIN BZW. AUS EINEM DERARTIGEN REGALLAGER**
SHELF-SERVING DEVICE FOR A HIGH-BAY RACKING FACILITY, HIGH BAY RACKING FACILITY WITH ONE SUCH SHELF-SERVING DEVICE AND METHOD FOR STORING/RETRIEVING GARMENT RODS IN OR OUT OF SUCH A HIGH-BAY RACKING FACILITY
APPAREIL DE COMMANDE D'ÉTAGÈRE POUR UN RAYONNAGE, RAYONNAGE DOTÉ D'UN TEL APPAREIL DE COMMANDE D'ÉTAGÈRE ET PROCÉDÉ DE CHARGEMENT/DÉCHARGEMENT DE TRINGLES À VÊTEMENTS SUR UN TEL RAYONNAGE

(30) Priorität: 26.03.2014 DE 102014205583
(43) Veröffentlichungstag der Anmeldung: 30.09.2015
(73) Patentinhaber: Dürkopp Fördertechnik GmbH, 33719 Bielefeld (DE)
(72) Erfinder: Wend, Michael, 33619 Bielefeld (DE)
(74) Vertreter: Rau, Schneck & Hübner Patentanwälte Rechtsanwälte PartGmbB

(56) Entgegenhaltungen:
- EP-A1- 1 106 537
- EP-B1- 2 130 789
- NL-A- 7 700 051
- US-A- 4 364 706

## Beschreibung

Die Erfindung betrifft ein Regalbediengerät für ein Regallager, ein Regallager mit einem derartigen Regalbediengerät sowie ein Verfahren zum Ein-/Auslagern von Kleiderstangen in ein bzw. aus einem derartigen Regallager.

Aus EP 2 130 789 B1 ist eine Anlage zum Be- und Entladen von Hochregalen mit hängender Ware bekannt. Eine derartige Anlage ermöglicht das vollautomatische Be- und Entladen von Hochregalen mittels eines eine Lastaufnahmevorrichtung aufweisenden Regalbediengeräts. Ein derartiges Regalbediengerät ist komplex. Der zum Be- und Entladen erforderliche Raumbedarf für die Lastaufnahmevorrichtung ist hoch.

Weitere Regalbediengeräte sind bekannt aus der DE 297 15 506 U1 und aus der DE 10 2007 013 863 A1.

Die NL 77 00 051 A offenbart eine Halterung für die Lagerung und Manipulation von Rohren, Rundstäben, Mehrkantstäben oder dergleichen.

Dieses Dokument offenbart ein Regelbediengerät gemäß dem Oberbegriff des Anspruchs 1.

Es ist eine Aufgabe der vorliegenden Erfindung, ein Regalbediengerät für ein Regallager derart zu verbessern, dass ein Regalbediengerät mit einer Lastaufnahmevorrichtung vereinfacht ausgeführt ist.

Diese Aufgabe ist erfindungsgemäß gelöst durch ein Regalbediengerät mit den im Anspruch 1 angegebenen Merkmalen.

Erfindungsgemäß wurde erkannt, dass der konstruktive Aufwand einer Lastaufnahmevorrichtung reduziert ist, wenn vertikal verfahrbare Hebeeinrichtungen zum Heben und/oder zum Senken jeweils einer Kleiderstange von unten verwendet werden. Gegenüber einer aus EP 2 130 789 B1 bekannten Greifeinrichtung ermöglicht die Lastaufnahmevorrichtung des erfindungsgemäßen Regalbediengeräts ein Anheben und Tragen der Kleiderstangen von einem Bereich unterhalb der Kleiderstangen. Es ist deshalb insbesondere nicht erforderlich, dass ein Regal, das von dem erfindungsgemäßen Regalbediengerät bedient wird, zusätzlichen Freiraum oberhalb der Kleiderstangen bereitstellt. Das erfindungsgemäße Regalbediengerät ermöglicht eine kompaktere, dichtere Anordnung von Kleiderstangen in einem Regal. Die Warendichte und/oder Lagerdichte in einem derartigen Regal ist erhöht. Dadurch, dass die Hebeeinrichtungen selbst vertikal verfahrbar sind, kann die Lastaufnahmevorrichtung während des Ein- bzw. Auslagerns von Kleiderstangen vertikal fixiert bleiben. Der konstruktive und apparative Aufwand für die Lastaufnahmevorrichtung sind reduziert. Die Lastaufnahmevorrichtung selbst ist vorteilhafterweise entlang einer Höhenrichtung, also vertikal, verfahrbar ausgeführt. Mit dem erfindungsgemäßen Regalbediengerät können Regale bedient werden, in welchen Kleiderstangen in verschiedenen Ebenen, sogenannten Regallagen, übereinander angeordnet sind. Insbesondere ist das Regalbediengerät für ein Hochregallager geeignet. Das Regalbediengerät ist entlang einer, insbesondere horizontal orientierten, Transportrichtung verfahrbar. Die Lastaufnahmevorrichtung weist eine Übergabevorrichtung auf, die entlang einer Übergaberichtung verfahrbar ist. Die Übergaberichtung ist insbesondere horizontal orientiert. Die Übergaberichtung ist insbesondere senkrecht zur Transportrichtung orientiert. Die Übergabevorrichtung dient zum Übergeben der Kleiderstangen von dem Regalbediengerät in das Regal. Durch das Übergeben der Kleiderstangen werden diese ein- bzw. ausgelagert. Insbesondere sind an der Übergabevorrichtung drei Hebeeinrichtungen vorgesehen. Die Hebeeinrichtungen sind an der Übergabevorrichtung nebeneinander und insbesondere gleich beabstandet angeordnet. Insbesondere ist es möglich, dass in Übergaberichtung hintereinander angeordnete Regale Regalaufnahmen auf identischem Höhenniveau aufweisen. Ein Höhenversatz verschiedener Regalreihen, wie er bei einer von oben zugreifenden Greifeinrichtung gemäß EP 2 130 789 B1 erforderlich ist, ist bei dem erfindungsgemäßen Regalbediengerät entbehrlich. Das Regallager kann insgesamt mit einer verbesserten Regelmäßigkeit aufgebaut sein. Insbesondere ergibt sich daraus die Verwendung von mehr Gleichteilen. Fertigung und Montage eines derartigen Regallagers sind vereinfacht. Der Betrieb des Regallagers ist vereinfacht und deshalb weniger fehleranfällig.

Vorteilhaft ist ein Regalbediengerät, bei dem die Hebeeinrichtungen unabhängig voneinander, einzeln verfahrbar sind. In Abhängigkeit der Gestaltung des Regallagers kann beispielsweise zunächst eine leere Kleiderstange entnommen und anschließend eine volle Kleiderstange in das Lager abgegeben werden. Die Reihenfolge kann auch vertauscht sein. Aufgrund der Möglichkeit der unabhängigen Betätigung der Hebeeinrichtungen ergibt sich eine erhöhte Flexibilität bei dem Ein- und Auslagern von Kleiderstangen. Insbesondere ist es möglich, eine erste Kleiderstange mit einer ersten Hebeeinrichtung ein- und eine zweite Kleiderstange mit einer zweiten Hebeeinrichtung im Wesentlichen gleichzeitig auszulagern. Das bedeutet, dass das Ein- und Auslagern mehrerer Kleiderstangen in einem Arbeitsablauf zeiteffektiv erfolgen kann.

Vorteilhaft ist ein Regalbediengerät, bei dem die Hebeeinrichtungen zwischen einer unteren Transportposition und einer oberen Be-/Entladeposition verfahrbar sind. Die Hebeeinrichtungen können unkompliziert aufgebaut sein, wobei eine Überwachung der unteren Transportpositionen und der oberen Be-/Entladeposition endlagengestützt erfolgen kann. Insbesondere erfolgt das Verfahren der Hebeeinrichtungen weggesteuert. Ein weggesteuertes Verfahren zwischen zwei Endpositionen ist unkompliziert umsetzbar. Gleichzeitig gewährleistet eine Wegsteuerung eine zuverlässige Betriebsweise. Die Hebeeinrichtungen sind fehlerunanfällig. Zusätzlich oder alternativ kann das Verfahren der Hebeeinrichtungen auch kraftgesteuert erfolgen. Mittels einer Kraftsteuerung kann beispielsweise eine Überlastsituation vermieden werden. Eine Überlastsituation kann in einem Kollisionsfall oder bei Überladung der Kleiderstange auftreten.

Vorteilhaft ist ein Regalbediengerät mit einem Hebeantrieb zum Verfahren der Hebeeinrichtung. Der Hebeantrieb ist insbesondere elektromotorisch ausgeführt, Alternativ können auch pneumatische und/oder hydraulische Hebeantriebe vorgesehen sein. Der elektromotorische Hebeantrieb ermöglicht ein schnelles, genaues und insbesondere stufenloses Verfahren zwischen zwei Endpositionen.

Vorteilhaft ist ein Regalbediengerät, bei dem eine Hebeeinrichtung zwei Hebeelemente aufweist, die jeweils zum Heben eines Endes einer Kleiderstange vorgesehen sind. Mittels der zwei Hebeelemente kann eine Kleiderstange zuverlässig und definiert angehoben werden. Eine derartige Hebeeinrichtung ist sicher und unkompliziert aufgebaut.

Besonders vorteilhaft ist, wenn ein Hebeelement jeweils eine Hebeaufnahme aufweist, die insbesondere als V-förmige Vertiefung ausgeführt ist. Dadurch ist eine zuverlässige Ablage der Kleiderstange in der Hebeaufnahme des Hebeelements zusätzlich verbessert. Ein unbeabsichtigtes Lösen einer Kleiderstange aus der Hebeaufnahme ist ausgeschlossen. Mittels der Hebeeinrichtung ist eine zuverlässige Verlagerung der Kleiderstange entlang der Übergabevorrichtung und/oder entlang der vertikalen Höhenrichtung garantiert. Die V-förmige Vertiefung hat eine zentrierende Wirkung für die Kleiderstange. Insbesondere ist die V-förmige Vertiefung infolge der Schwerkraft der Kleiderstangen selbstsichernd während des Transports der Kleiderstange. Eine V-förmige Vertiefung ist konstruktiv unaufwendig herstellbar.

Vorteilhaft ist ein Regalbediengerät mit einem Übergabeschlitten als Übergabevorrichtung. Der Übergabeschlitten weist einen entlang der Übergaberichtung teleskopierbaren Rahmen auf. Der Übergabeschlitten ist robust und platzsparend ausgeführt. Der Übergabeschlitten ermöglicht eine effektive Zugänglichkeit des Regals.

Es ist eine weitere Aufgabe der vorliegenden Erfindung, ein Regallager zu schaffen, das vereinfacht aufgebaut ist und insbesondere eine erhöhte Lagerdichte ermöglicht.

Diese Aufgabe ist erfindungsgemäß gelöst durch ein Regallager mit den im Anspruch 8 angegebenen Merkmalen.

Erfindungsgemäß wurde erkannt, dass ein Regallager mindestens ein erfindungsgemäßes Regalbediengerät aufweist, das entlang einer Transportrichtung zu einem Regal hin und von einem Regal weg verfahrbar ist. Insbesondere weist das Regallager eine Be-/Entladestation auf. Das Regalbediengerät kann zwischen der Be-/Entladestation und dem mindestens einem Regal verfahrbar sein. Das Regal ist insbesondere ein Hochregal, das mehrere vertikal zueinander beabstandete Regallagen aufweist. In jeder Regallage können Waren, insbesondere Hängewaren gelagert werden. Das bedeutet, dass in einem Hochregal mit mehreren Regallagen Hängewaren in verschiedenen Ebenen übereinander gelagert werden können. Es ist vorteilhaft, wenn in einer Regallage mehrere Kleiderstangen angeordnet werden können. Die Warendichte und somit die Lagerkapazität sind dadurch erhöht. Die Vorteile des Regallagers stimmen mit denen überein, die anhand der Verwendung des erfindungsgemäßen Regalbediengeräts bereits erläutert wurden, worauf hiermit verwiesen wird. Wesentlich ist, dass das erfindungsgemäße Regallager eine erhöhte Lagerdichte ermöglicht. Das erfindungsgemäße Regallager ist insgesamt mit erhöhter Regelmäßigkeit ausgebaut. Der konstruktive Aufwand, insbesondere ein Aufwand für Fertigung und/oder Montage des Lagers, ist vereinfacht. Die Bedienung des Regallagers ist vereinfacht, da insbesondere verschiedene Höhenniveaus benachbarter Lagerreihen entbehrlich sind. Insbesondere sind entlang der Übergaberichtung hintereinander mehrere Regale angeordnet. Die Regale sind insbesondere identisch ausgeführt. Insbesondere sind die Regalaufnahmen der Regale jeweils auf identischem Höhenniveau.

Vorteilhaft ist ein Regallager, bei dem ein entlang der Übergaberichtung orientierter Hebeeinrichtungsabstand zwischen zwei benachbarten Hebeeinrichtungen kleiner ist als ein entlang der Übergaberichtung orientierter Regalaufnahmeabstand zwischen zwei benachbarten Regalaufnahmen des Regals. Die Übergabevorrichtung und die Hebeeinrichtungen sind vorteilhaft zwischen den Regalaufnahmen bezüglich einer vertikalen Orientierung flexibel anordenbar. Insbesondere ist es möglich, dass eine erste Hebeeinrichtung mit einer ersten Regalaufnahme vertikal fluchtend und eine zweite Hebeeinrichtung mit einer zweiten Regalaufnahme vertikal nicht-fluchtend anordenbar sind. Es ist denkbar, dass der Hebeeinrichtungsabstand größer ist als der Regalaufnahmeabstand. Wesentlich ist, dass der Hebeeinrichtungsabstand und der Regalaufnahmeabstand sich unterscheiden. Der Unterschied muss insbesondere derart gewählt sein, dass bei einer vertikal fluchtenden Anordnung der ersten Hebeeinrichtung und der ersten Regalaufnahme, die zweite Hebeeinrichtung vertikal verfahrbar ist, ohne dass eine Wechselwirkung mit der zweiten Regalaufnahme erfolgt. Insbesondere entspricht ein Mindestunterschied zwischen Hebeeinrichtungsabstand und Regalaufnahmeabstand etwa einem Durchmesser einer Kleiderstange, insbesondere mindestens dem 1,5fachen und insbesondere mindestens dem doppelten Durchmesser der Kleiderstange.

Vorteilhaft ist ein Regallager, bei dem eine entlang der Transportrichtung orientierte Breite des Übergabeschlittens größer ist als eine entlang der Transportrichtung orientierte Regalaufnahmebreite zwischen zwei benachbarten Regalaufnahmen des Regals zur gemeinsamen Aufnahme einer Kleiderstange. Die Breite des Übergabeschlittens definiert den Abstand zwischen zwei Hebeelementen einer Hebeeinrichtung.

Eine in den Regalaufnahmen des Regals abgelegte Kleiderstange wird aufgenommen, indem die Hebeeinrichtungen die Kleiderstange jeweils an einem äußeren Ende, insbesondere hinter den Regalaufnahmen, greifen. Dadurch kann die Länge der Kleiderstange zwischen den Regalaufnahmen vollständig als Aufnahmefläche für Kleiderbügel genutzt werden. Die Auslastung jeder einzelnen Kleiderstange ist erhöht. Die Handhabung der Kleiderstange mittels der Lastaufnahmevorrichtung ist vereinfacht.

Vorteilhaft ist ein Regallager, bei dem das Regal zwei entlang der Transportrichtung beabstandete Vertikalsäulen aufweist. An jeder Vertikalsäule sind jeweils mindestens zwei Regalaufnahmen vorgesehen. Die Regalaufnahmen sind jeweils entlang der Transportrichtung, insbesondere der jeweils anderen Vertikalsäule des Regals zugewandt. Die Regalaufnahmen sind insbesondere bezüglich der Vertikalsäule, an welcher sie befestigt sind, beabstandet angeordnet. Dadurch ist es möglich, eine in einer Regalaufnahme angeordnete Kleiderstange zu hintergreifen. Das Hintergreifen erfolgt in einem Zwischenraum zwischen der Regalaufnahme und der zugehörigen Vertikalsäule.

Besonders vorteilhaft ist es, wenn die Regalaufnahmen jeweils an einem separaten Abstandshebel angeordnet sind. Die Abstandshebel sind insbesondere L-förmig ausgeführt. Die Abstandshebel sind entlang der Übergaberichtung beabstandet zueinander angeordnet. Aufgrund der beabstandeten Anordnung der L-förmigen Abstandshebel entlang der Übergaberichtung ergibt sich ein Freibereich als Unterbrechung zwischen den Regalaufnahmen in Übergaberichtung. Dadurch ist ein flexibles Verfahren der Hebeeinrichtungen im Bereich des Regals ermöglicht. Insbesondere ist ein vertikales Verfahren einer mit einer Kleiderstange belegten Hebeeinrichtung durch den Freibereich vereinfacht.

Es ist eine weitere Aufgabe der vorliegenden Erfindung, ein Verfahren zum Ein-/Auslagern von Kleiderstangen in ein bzw. aus einem Regallager zu vereinfachen.

Diese Aufgabe ist erfindungsgemäß gelöst durch ein Verfahren mit den im Anspruch 13 angegebenen Merkmalen.

Erfindungsgemäß wurde erkannt, dass ein Ein-/Auslagern von Kleiderstangen dadurch vereinfacht ist, dass mittels eines erfindungsgemäßen Regalbediengeräts Kleiderstangen von unten angehoben werden. Das Ablegen und Entnehmen von Kleiderstangen in das Regal bzw. aus dem Regal ist vereinfacht. Das Ein-/Auslagern von Kleiderstangen ist schnell und effizient möglich. Die Zugriffszeit auf eingelagerte Artikel ist verkürzt. Bei dem erfindungsgemäßen Verfahren erfolgt ein Verfahren eines mit einer, insbesondere mit aufgehängten Kleidungsstücken beladenen, einzulagernden Kleiderstange bestückten Regalbediengeräts. Das Regalbediengerät wird entlang einer Transportrichtung in eine, insbesondere horizontale, Ein-/Auslagerposition an dem Regal verfahren. Die Transportrichtung ist insbesondere parallel zu den an dem Regal gelagerten Kleiderstangen orientiert. Anschließend wird die Übergabevorrichtung entlang einer Übergaberichtung in eine, insbesondere horizontale, erste Übergabeposition an dem Regal verfahren. Die Übergabevorrichtung ist mit der einzulagernden Kleiderstange belegt. In der ersten Übergabeposition erfolgt ein vertikales Verfahren, also nach oben, von mindestens zwei Hebeeinrichtungen. Eine der mindestens zwei Hebeeinrichtungen ist mit der einzulagernden Kleiderstange belegt. Es erfolgt ein Entnehmen einer, insbesondere leeren und unbestückten, auszulagernden Kleiderstange aus den Regalaufnahmen mit der unbelegten Hebeeinrichtung. Zudem erfolgt ein Ablegen der einzulagernden Kleiderstange mittels der belegten Hebeeinrichtung an Regalaufnahmen, die sich insbesondere von den Regalaufnahmen unterscheiden, von welchen zuvor die auszulagernde Kleiderstange entnommen worden ist. Insbesondere ist es auch denkbar, dass zunächst die einzulagernde Kleiderstange abgelegt und anschließend eine auszulagernde Kleiderstange entnommen wird. Insbesondere ist es aber vorteilhaft, wenn eine Austausch von Kleiderstangen, also das Ablegen einer einzulagernden Kleiderstange und das Entnehmen einer auszulagernden Kleiderstange, in einem Vorgang erfolgt, also insbesondere ohne das ein vollständiges Ein- und Ausfahren der Übergabevorrichtung entlang der Übergaberichtung notwendig ist. Die Transferzeiten sind dadurch reduziert. Das Verfahren ist insbesondere schnell und effektiv anwendbar. Nach dem Austausch der Kleiderstangen werden die Hebeeinrichtungen vertikal nach unten in die horizontale Übergabeposition verfahren. Danach wird die mit der auszulagernden Kleiderstange belegte Übergabevorrichtung entlang der Übergaberichtung in die Ein-/Auslagerposition verfahren. Anschließend wird das mit der auszulagernden Kleiderstange belegte Regalbediengerät entlang der Transportrichtung, insbesondere zu der Be-/Entladestation, verfahren. Anschließend kann die auszulagernde Kleiderstange von dem Regalbediengerät an die Be-/Entladestation ausgelagert werden.

Vorteilhaft ist ein Verfahren, wenn nach dem Entnehmen der auszulagernden Kleiderstange aus dem Regal die Übergabevorrichtung entlang der Übergaberichtung in eine zweite Übergabeposition an dem Regal verfahren wird. Die zweite Übergabeposition ist so festgelegt, dass die mit der einzulagernden Kleiderstange belegte Hebeeinrichtung mit unbelegten Regalaufnahmen des Regals vertikal fluchtend angeordnet ist. Dazu ist die Hebeeinrichtung in einer oberen Be-/Entladeposition, also oberhalb der Regalaufnahmen angeordnet. In der unteren Transportposition ist die Hebeeinrichtung unterhalb der Regalaufnahmen angeordnet. In der Transportposition ist es möglich, dass das Regalbediengerät unter den Regalaufnahmen hindurch verfahren werden kann.

Vorteilhaft ist ein Verfahren, bei dem das Ablegen der einzulagernden Kleiderstange durch vertikales Absenken der belegten Hebeeinrichtung erfolgt. Das Ablegen der einzulagernden Kleiderstange ist einfach und unkompliziert möglich.

Ein Ausführungsbeispiel der Erfindung wird nachfolgend anhand der Zeichnung näher erläutert. In dieser zeigen:
- Fig. 1: eine perspektivische Darstellung eines erfindungsgemäßen Regalbediengeräts in einem Regallager in einer Ein-/Auslagerposition,
- Fig. 2: eine Fig. 1 entsprechende Darstellung in einer ersten Übergabeposition des Regalbediengeräts,
- Fig. 3: eine Fig. 2 entsprechende perspektivische Ansicht mit dem Regalbediengerät, bei dem zwei Hebeeinrichtungen in einer oberen Be-/Entladeposition angeordnet sind,
- Fig. 4: ein vergrößerter Detailausschnitt der Hebeeinrichtungen gemäß Fig. 3,
- Fig. 5: eine Fig. 4 entsprechende vergrößerte Detailansicht gemäß einem abweichenden Blickwinkel,
- Fig. 6: eine Fig. 5 entsprechende Ansicht mit den Hebeeinrichtungen in der unteren Transportposition,
- Fig. 7 bis 27: schematisierte Seitenansichten einer Stadienabfolge für ein Ein-/Auslagern von Kleiderstangen in ein bzw. aus einem Regallager mittels eines erfindungsgemäßen Regalbediehgeräts.

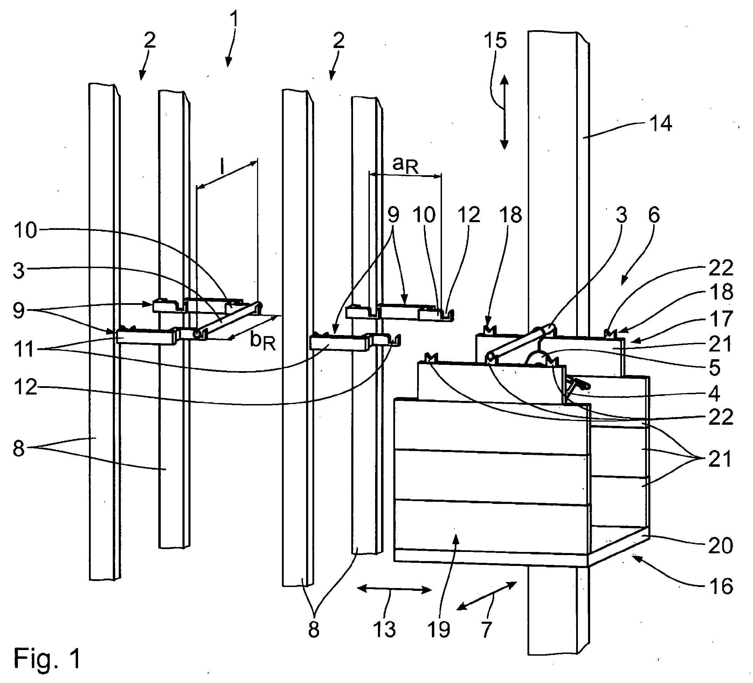

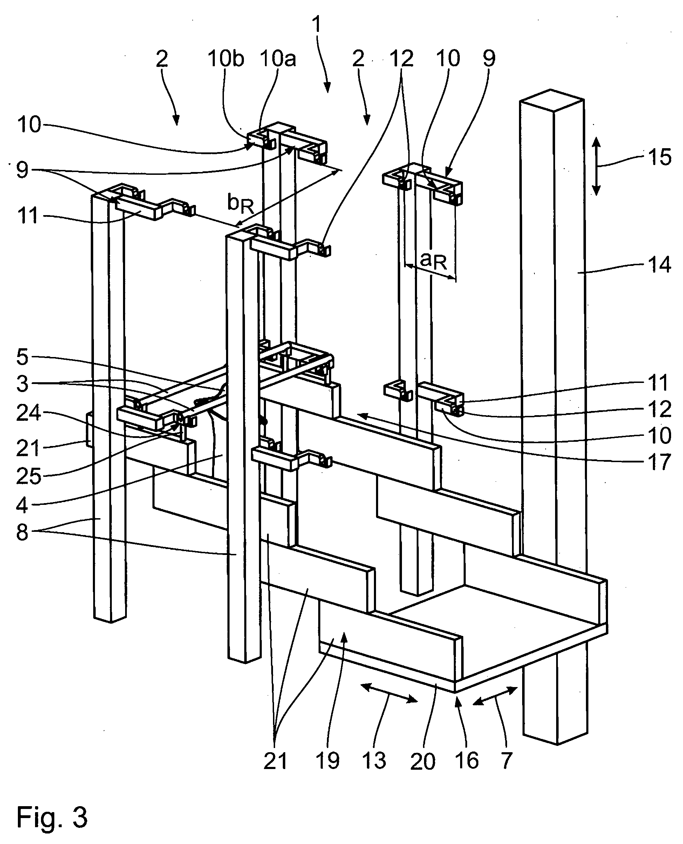

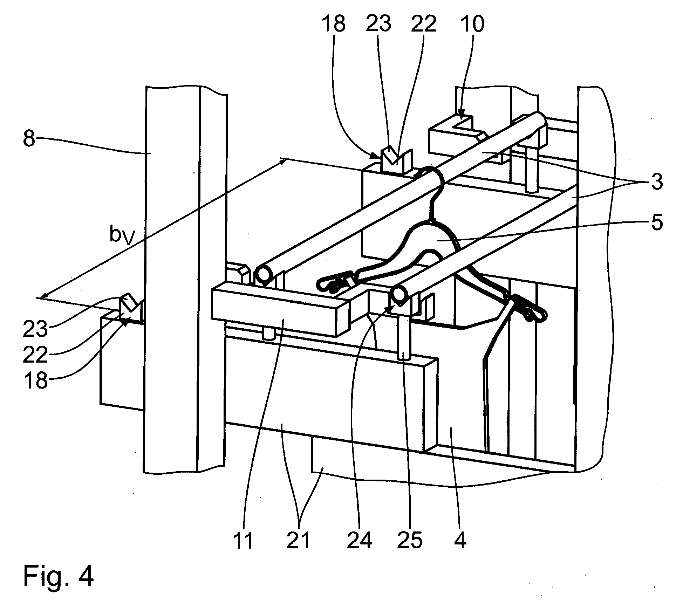

In Fig. 1 bis 6 ist ausschnittsweise ein Regallager dargestellt, wie es an sich aus der EP 2 130 789 B1 bekannt ist. Das Regallager 1 weist mehrere Regale 2 auf, die als Hochregale ausgeführt sind. Das bedeutet, dass die Regale 2 Waren 4 in verschiedenen, in einer vertikalen Richtung beabstandet zueinander angeordneten Ebenen, sogenannte Regallagen, aufnehmen können. Das Regallager 1 ist ein Hochregallager. Die Regale 2 dienen zum Aufnehmen von Kleiderstangen 3, an welchen Kleidungsstücke 4 mittels eines Kleiderbügels 5 aufgehängt gelagert werden können. Die Regale 2 sind grundsätzlich geeignet, hängende Waren zu lagern. Aus darstellerischen Gründen sind in Fig. 1 lediglich zwei Regale 2 gezeigt, die in einer Richtung senkrecht zu einer Längsachse der Kleiderstangen 3 beabstandet zueinander, also hintereinander, angeordnet sind. Es ist insbesondere möglich, mehrere Regale 2 entlang der Achse der Kleiderstange 3 nebeneinander anzuordnen.

Das Regallager umfasst ferner ein Regalbediengerät 6 zum Bedienen der Regale 2. Das Regalbediengerät 6 ermöglicht das Ein- und Auslagern der Kleiderstangen 3 in die Regale 2. Das Regallager 1 umfasst ferner eine nicht dargestellte Be-/Entladestation. Üblicherweise entnimmt das Regalbediengerät 6 der Be-/Entladestation eine mit Kleidung 4 bestückte Kleiderstange 3. Die mit Kleidung 4 bestückte Kleiderstange 3 wird in eines der Regale 2 eingelagert. Leere, also nicht mit Kleidung bestückte Kleiderstangen 3 werden aus dem Regal 2 mittels des Regalbediengeräts 6 entnommen und an die Be-/Entladestation ausgelagert.

Das Regalbediengerät 6 ist zwischen der Be-/Entladestation und den Regalen 2 entlang einer Transportrichtung 7 verfahrbar. Insbesondere im Bereich der Regale 2 ist die Transportrichtung 7 parallel zu einer Längsachse der Kleiderstangen 3 orientiert. In Abhängigkeit der Anordnung der Regale 2 in dem Regallager 1 kann die Transportrichtung zumindest abschnittsweise nicht-linear ausgeführt sein. Vorteilhaft ist es, wenn die Transportrichtung im Wesentlichen linear ist.

Mehrere, entlang der Transportrichtung 7 nebeneinander angeordnete Regale 2 bilden eine Regalreihe. Gemäß dem gezeigten Ausführungsbeispiel ist das Regallager 1 zweireihig ausgeführt, da zwei Regale 2 in einer Richtung senkrecht zur Transportrichtung 7 beabstandet zueinander, also bezüglich der Transportrichtung 7 hintereinander, angeordnet sind. Es ist möglich, weitere Regalreihen vorzusehen, die zu den in Fig. 1 gezeigten Regalreihen an dem Regalbediengerät 6 gegenüberliegend angeordnet sind. Ein zwischen den gegenüberliegenden Regalreihen verbleibender Freiraum ist eine Fahrgasse für das Regalbediengerät. Vorteilhafterweise kann das Regalbediengerät 6 sämtliche Regale 2 von der Fahrgasse aus bedienen.

Zum Verfahren entlang der Transportrichtung 7 weist das Regalbediengerät 6 einen nicht dargestellten Antrieb auf. Der Antrieb ist insbesondere elektromotorisch ausgeführt. Es sind auch andere Antriebskonzepte denkbar.

Es ist vorteilhaft, wenn sämtliche Regale 2 in dem Regallager 1 identisch ausgeführt sind.

Das Regal 2 weist zwei entlang der Transportrichtung 7 beabstandete Vertikalsäulen 8 auf. An den Vertikalsäulen 8 sind jeweils zwei Regalaufnahmen 9 angeordnet. Die Regalaufnahmen 9 sind jeweils als L-förmiger Abstandshebel 10 ausgeführt, wobei ein erster, kürzerer Schenkel 10a des L sich entlang der Transportrichtung 7 der jeweils anderen Vertikalsäule 8 des Regals erstreckt. Ein zweiter, längerer Schenkel 10b des Abstandshebels 10 erstreckt sich senkrecht zur Transportrichtung 7 der Fahrgasse, also in Richtung des Regalbediengeräts 6 von den Vertikalsäulen 8. Jeweils ein Abstandshebel 10 ist unmittelbar an der Vertikalsäule 8 befestigt. Der jeweils andere Abstandshebel 10 ist mittels eines Distanzhebels 11 an der Vertikalsäule 8 befestigt.

Der zweite, längere Schenkel 10b des Abstandshebels 10 weist eine nach oben geöffnete, im Wesentlichen rechteckförmige Aufnahme 12 auf. Die Aufnahme 12 hat an dem nach oben geöffneten Rand Einführschrägen, die das Einführen einer Kleiderstange 3 in die Aufnahme 12 vereinfachen. Die Aufnahmen 12 sind jeweils derart ausgeführt, dass die Kleiderstange 3 im Bereich eines jeweiligen Endes der Kleiderstange 3 sicher und zuverlässig in der Aufnahme 12 gehalten ist. Insbesondere ist eine Kantenlänge der Aufnahme 12 mindestens so groß wie der Durchmesser der Kleiderstange 3.

Die Regalaufnahmen 9 sind, insbesondere durch den ersten, kürzeren Schenkel 10a, bezüglich der Vertikalsäule 8, an der sie jeweils befestigt sind, entlang der Transportrichtung 7 beabstandet angeordnet. Die beiden Regalaufnahmen 9 einer Vertikalsäule 8 sind in einer Richtung senkrecht zur Transportrichtung 7 beabstandet angeordnet. Die Richtung senkrecht zur Transportrichtung 7 wird als Übergaberichtung 13 bezeichnet. Der Regalaufnahmeabstand a_{R} bezeichnet den Abstand zwischen zwei benachbarten Regalaufnahmen 9 einer Vertikalsäule 8 entlang der Übergaberichtung 13. Eine Regalaufnahmebreite b_{R} ist der Abstand zwischen zwei entlang der Transportrichtung 7 beabstandet angeordneten Regalaufnahmen 9 eines Regals 2. Die Regalaufnahmebreite b_{R} ist kleiner als eine Länge 1 einer Kleiderstange 3. Das bedeutet, dass die Kleiderstange 3, die in zwei Regalaufnahmen 9 eines Regals abgelegt ist, an den Regalaufnahmen 9 entlang der Transportrichtung 7 übersteht. Zum horizontalen Ablegen einer Kleiderstange 3 sind jeweils zwei korrespondierende Regalaufnahmen 9 in einer identischen Höhenposition an jeweils einer Vertikalsäule 8 angeordnet.

Weiterhin sind die jeweils zwei an einer Vertikalsäule 8 befestigten Regalaufnahmen 9 in derselben Höhenposition angeordnet. Das bedeutet, dass in einer Regallage zwei Kleiderstangen 3 auf identischem Höhenniveau, also in derselben Höhenposition, in dem Regal 2 abgelegt werden können. Zwischen den Regalaufnahmen 9 einer Regallage an dem Regal 2 besteht kein Höhenunterschied. Da die Regale 2 insbesondere identisch ausgeführt sind, befinden sich die Regalaufnahmen 9 der verschiedenen Regale 2 jeweils in identischer Höhenposition. In dem Hochregallager sind mehrere Regallagen, insbesondere gleichmäßig, vertikal beabstandet zueinander angeordnet.

Das Regalbediengerät 6 umfasst eine an einer Hubführung 14 vertikal, also entlang einer Höhenrichtung 15, verfahrbare Lastaufnahmevorrichtung 16. Die Höhenrichtung 15 ist insbesondere senkrecht zu einer von der Transportrichtung 7 und der Übergaberichtung 13 aufgespannten Ebene angeordnet.

Die Lastaufnahmevorrichtung 16 weist eine Übergabevorrichtung 17 auf, die zum Übergeben der Kleiderstangen 3 an das Regal 2 dient. Die Übergabevorrichtung 17 ist entlang der Übergaberichtung 13 verfahrbar. An der Übergabevorrichtung 17 sind drei entlang der Höhenrichtung 15, also vertikal, verfahrbare Hebeeinrichtungen 18 angeordnet. Die Hebeeinrichtungen 18 sind unabhängig voneinander, einzeln betätigbar, also verfahrbar. Dazu kann ein elektromotorischer, ein pneumatischer oder ein hydraulischer Hebeantrieb, der nicht dargestellt ist, vorgesehen sein. Es sind auch mehrere Hebeantriebe möglich.

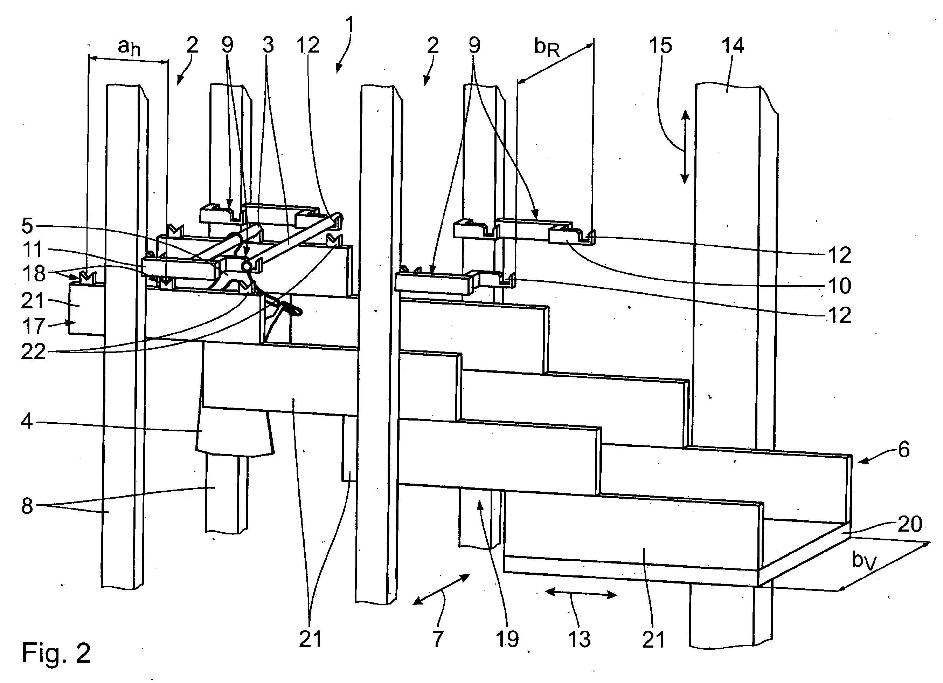

Die Übergabevorrichtung 17 ist als Übergabeschlitten ausgeführt, der einen entlang der Übergaberichtung 13 teleskopierbaren Rahmen 19 aufweist. Gemäß dem gezeigten Ausführungsbeispiel umfasst der teleskopierbare Rahmen 19 eine horizontal orientierte Grundplatte 20. Die Grundplatte 20 weist eine rechteckige Grundform auf. An den zwei entlang der Übergaberichtung 13 orientierten Kanten der Grundplatte 20 sind jeweils vier übereinander angeordnete Seitenwandelemente 21 angeordnet. Die Seitenwandelemente 21 sind stirnseitig miteinander verbunden und zueinander entlang der Übergaberichtung 13 geführt verlagerbar. Dazu kann stirnseitig an den Seitenwandelementen 21 jeweils eine nicht dargestellte Linearführungseinheit vorgesehen sein. Fig. 1 zeigt den teleskopierbaren Rahmen in einer eingefahrenen Anordnung. In dieser Anordnung sind die Seitenwandelemente 21 des Rahmens 19 fluchtend übereinander angeordnet. In einer teleskopisch ausgefahrenen Anordnung des Rahmens 19 gemäß Fig. 2 sind die Seitenwandelemente 21 entlang der Übergaberichtung 13 ausgefahren. Das unterste Seitenwandelement 21 ist fest mit der Grundplatte 20 verbunden. Die jeweils darüber angeordneten Seitenwandelemente 21 sind ausgefahren.

Die Hebeeinrichtungen 18 sind an einer Oberseite der Übergabevorrichtung 17 angeordnet. Gemäß dem gezeigten Ausführungsbeispiel sind die Hebeeinrichtungen 18 an einer oberen Stirnseite des obersten Seitenwandelements 21 angeordnet.

Entlang der Übergaberichtung 13 sind die Hebeeinrichtungen 18 beabstandet zueinander angeordnet. Insbesondere ist der jeweilige Abstand zwischen zwei benachbarten Hebeeinrichtungen identisch. Ein zwischen zwei beabstandeten Hebeeinrichtungen 18 vorgesehener Hebeeinrichtungsabstand aₕ ist kleiner als der Regalaufnahmeabstand a_{R}. Wesentlich ist, dass der Hebeeinrichtungsabstand aₕ von dem Regalaufnahmeabstand a_{R} verschieden ist.

Die Breite des Rahmens 19 der Übergabevorrichtung 17 entlang der Transportrichtung 7 ist durch die Grundplatte 20 vorgegeben.

Jede Hebeeinrichtung 18 weist zwei korrespondierende Hebeelemente 22 auf. Die korrespondierenden Hebeelemente 22 sind identisch ausgeführt. Die Hebeelementen 22 sind entlang der Transportrichtung 7 beabstandet, insbesondere mit einem Abstand bᵥ, angeordnet. Der Abstand bᵥ entspricht einer entlang der Transportrichtung 7 orientierten Breite der Übergabevorrichtung 17. Die Hebeelemente 22 sind zum Heben eines freien Endes einer Kleiderstange 3 von unten vorgesehen. Dazu weist jedes Hebeelement 22 eine Hebeaufnahme 23 auf. Die Hebeaufnahme 23 ist als V-förmige, nach oben geöffnete Vertiefung ausgeführt. Durch die V-förmige Ausgestaltung der Hebeaufnahme 23 ist ein sicheres Ablegen einer Kleiderstange 3, insbesondere bei einer Verlagerung der Übergabevorrichtung entlang der Übergaberichtung 13, garantiert. Die V-förmige Vertiefung hat eine selbstzentrierende Wirkung. Aufgrund der Schwerkraft der Kleiderstange 3 und möglicherweise daran befestigter Kleidung 4 wirkt die Hebeaufnahme 23 selbstsichernd. Die Herstellung der Hebeaufnahme 23 ist konstruktiv unaufwendig. Die Hebeaufnahme 23 ist Teil eines Stangenkopfes 24, der an einem oberen Ende einer Hubstange 25 befestigt ist. Die Hebeelementen 22 sind mittels der Hubstange 25, die vertikal geführt in dem Seitenwandelement 21 des Rahmens 19 angeordnet sind, entlang der Höhenrichtung 15 vertikal verlagerbar.

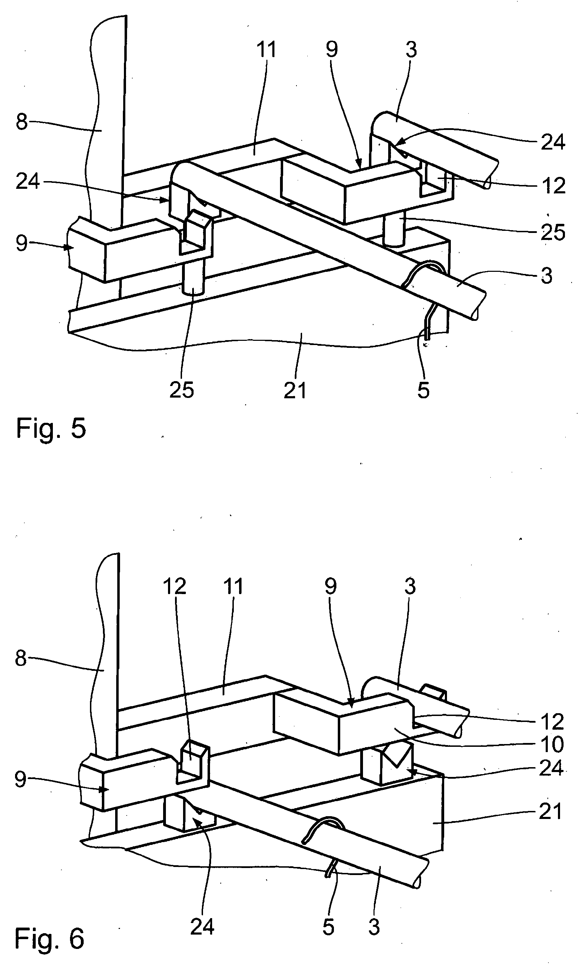

Der Abstand bᵥ zwischen zwei korrespondierenden Hebeelementen 22 ist größer als die Regalaufnahmebreite b_{R}. Der Abstand bᵥ entspricht im Wesentlichen der Länge 1 einer Kleiderstange 3. Das bedeutet, dass die Kleiderstange 3 im Wesentlichen bündig mit den Hebeelementen 22 bezogen - auf die Transportrichtung 7 abschließt. Insbesondere steht die Kleiderstange 3 an den Hebeelementen 22 entlang der Transportrichtung 7 nicht über. Die Länge der Hubstange 25 entlang der Höhenrichtung 15 ist derart gewählt, dass eine Kleiderstange 3 aus der Aufnahme 12 der Regalaufnahme 9 gehoben werden kann. In einer maximal ausgefahrenen Höhenposition, der Be-/Entladeposition, der Hebeelemente 22 ist die Hubstange 3 vertikal, nach oben, beabstandet zu den Regalaufnahmen, insbesondere zu den Abstandshebeln 10, angeordnet, wie dies in Fig. 5 dargestellt ist.

In der maximal eingefahrenen Position der Hebeelemente 22, der Transportposition, liegt der Stangenkopf 24 auf der oberen Stirnseite des obersten Seitenwandelements 21 des Rahmens 19 der Übergabevorrichtung 17 an. Der Stangenkopf 24 mit der darin angeordneten Hebeaufnahme 23 ist in dem maximal eingefahrenen Zustand gemäß Fig. 6 vertikal, nach unten, derart von den Abstandshebeln 10 der Regalaufnahmen 9 angeordnet, dass ein Durchfahren der Übergabevorrichtung 17 entlang der Übergaberichtung 13 unter einer Regalaufnahme hindurch möglich ist. Insbesondere beträgt der Abstand zwischen einer Oberkante des Hebeelements 22 und einer Unterkante des Abstandshebels 10 der Regalaufnahme 9 in der maximal eingefahrenen Position der Hebeelemente 22 gemäß Fig. 6 etwa den Durchmesser der Kleiderstange 3.

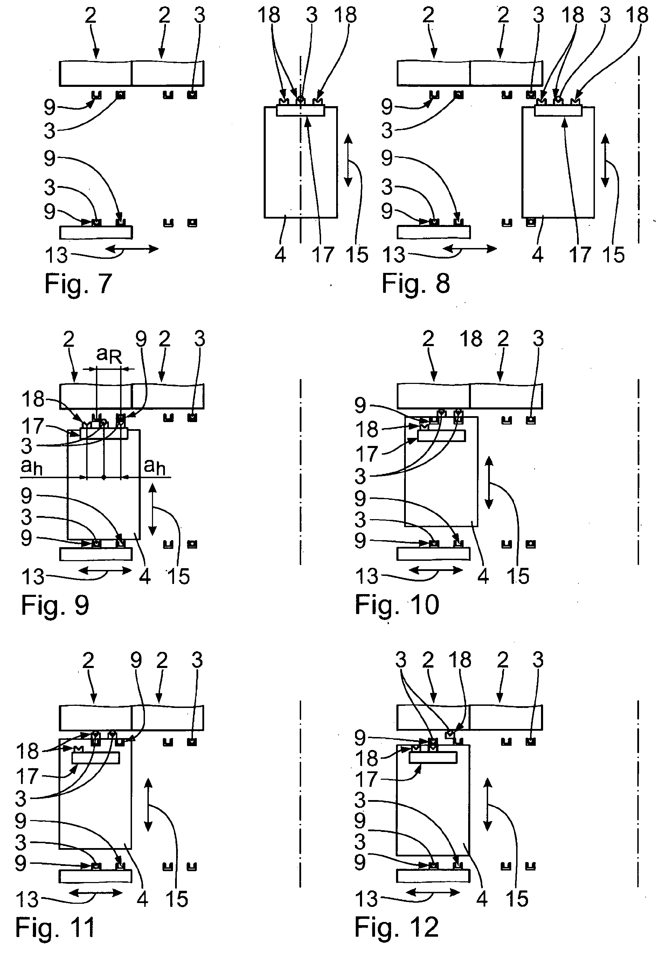

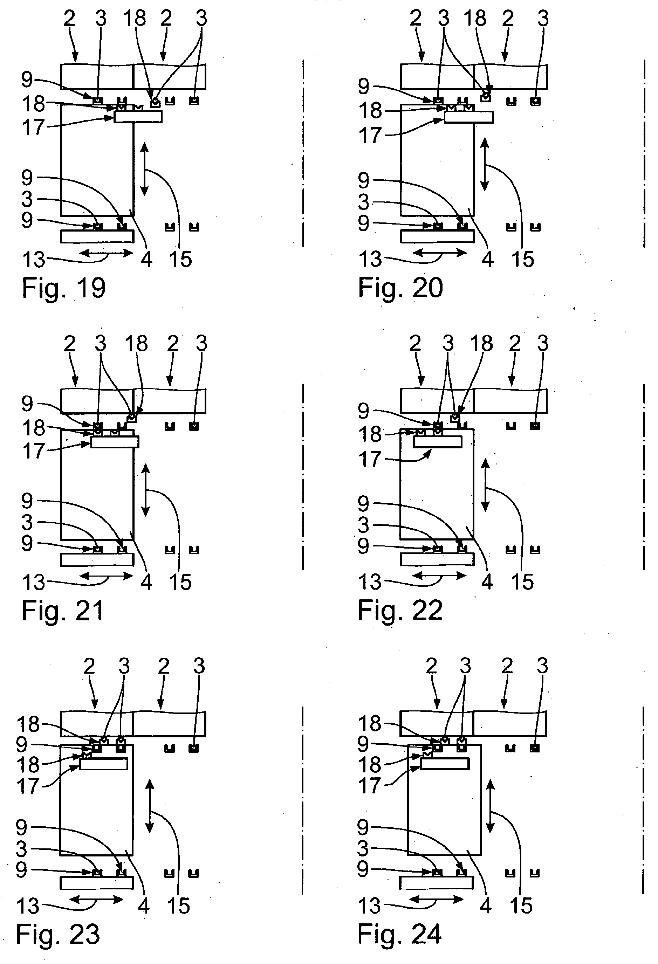

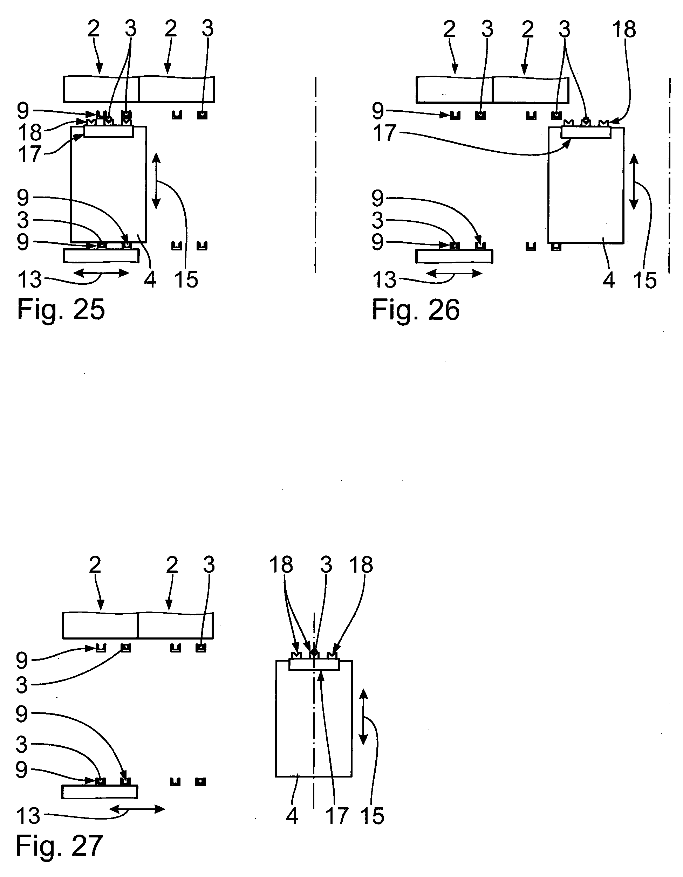

Im Folgenden wird anhand der Fig. 7 bis 27 das Ein- und Auslagern von Kleiderstangen in das Regal 2 und aus dem Regal 2 näher erläutert. Die Darstellungen gemäß Fig. 7 bis 27 sind Seitenansichten. Die Zeichenebene ist senkrecht zur Transportrichtung 7 orientiert. Das bedeutet, die Zeichenebene ist parallel zu einer Ebene, die aufgespannt ist von der Übergaberichtung 13 und der Höhenrichtung 15. Jeweils rechts im Bild ist die Fahrgasse dargestellt, entlang der das Regalbediengerät 6 senkrecht zur Zeichenebene verfahrbar ist. Jeweils links dargestellt sind zwei identische Regale 2, die entlang der Übergaberichtung 13 beabstandet zueinander hintereinander angeordnet sind. Die Regale 2 sind jeweils identisch ausgeführt. Jedes Regel 2 weist zwei Regallagen auf.

Aus Gründen der übersichtlicheren Darstellung sind die Seitenansichten gemäß Fig. 7 bis 27 stark schematisiert, also vereinfacht, dargestellt. Insbesondere sind die Vertikalsäulen 8 der Regale nicht dargestellt. Die Regalaufnahmen 9 sind als U-förmige Vertiefungen dargestellt.

Zunächst entnimmt das Regalbediengerät 6 einer nicht dargestellten Be-/ Entladestation eine mit Kleidungsstücken 4 bestückte Kleiderstange 3. Die der Be-/Entladestation entnommene Kleiderstange 3 mit daran angehängter Kleidung 4 ist an der entlang der Übergaberichtung 13 mittleren angeordneten Hebeeinrichtung 18 aufgenommen. Die beiden äußeren Hebeeinrichtungen 18 sind frei, tragen also keine Kleiderstange 3. Anschließend verfährt das Regalbediengerät 6 mit der mit Kleidungsstücken 4 beladenen, in das Regal 2 einzulagernden Kleiderstange 3 entlang der Transportrichtung 7 in eine Ein-/Auslagerposition an dem Regal 2. Die Ein-/Auslagerposition ist horizontal orientiert. Diese Situation ist in Fig. 7 dargestellt. Anschließend verfährt die Übergabevorrichtung 17 entlang der Übergaberichtung 13 in eine horizontale Übergabeposition. Die Übergabevorrichtung 17 ist derart ausgeführt, dass der Übergabeschlitten mit den Hebeeinrichtungen 18 und möglicherweise darin abgelegten Kleiderstangen 3 zwischen zwei entlang der Höhenrichtung 15 beabstandet angeordneten Regallagen eines Regals 2 hindurch transportiert werden kann (Fig. 8). Die Übergabeposition an dem Regal 2 ist in Fig. 9 dargestellt. Gemäß dem gezeigten Ausführungsbeispiel wird also das der Fahrgasse abgewandte Regal 2 zunächst beladen.

Während des Verfahrens des Regalbediengeräts 6 und insbesondere der Übergabevorrichtung 17 sind die Hebeeinrichtungen 18 in einer eingefahrenen Position. Die Hebeeinrichtungen 18 befinden sich also in einer unteren Transportposition.

Gemäß Fig. 9 ist die Übergabeposition der Übergabevorrichtung 17 an dem Regal 2 erreicht, wenn die rechts dargestellte Hebeeinrichtung 18 unterhalb der rechten Regalaufnahme 9 des Regals 2 angeordnet ist. In der rechten Regalaufnahme 9 ist eine leere, unbestückte Kleiderstange 3 angeordnet. Insbesondere ergibt sich aus Fig. 9 unmittelbar, dass der Hebeeinrichtungsabstand aₕ zwischen zwei benachbarten Hebeeinrichtungen 18 kleiner ist als der Regalaufnahmeabstand a_{R} zwischen zwei benachbarten Regalaufnahmen 9 einer Regallage des Regals 2. Ausgehend von der Übergabeposition in Fig. 9 fahren zwei, nämlich die unterhalb der rechten Regalaufnahme 9 vertikal fluchtend angeordnete Hebeeinrichtung 18 und die mittlere Hebeeinrichtung 18, die die bestückte Kleiderstange 3 trägt, vertikal nach oben, bis eine maximal ausgefahrene Position, eine obere Be-/Entladeposition, erreicht ist. Diese Anordnung ist in Fig. 10 dargestellt. Die in Fig. 10 links dargestellte Hebeeinrichtung 18 wird in diesem Verfahrensschritt nicht vertikal verfahren, bleibt also in der unteren Transportposition.

Dadurch, dass die Regalaufnahmen 9 entlang der Transportrichtung 7 jeweils beabstandet zu den Vertikalsäulen 8 angeordnet sind, kann ein Hebeelement 22 einer Hebeleinrichtung 18 in einem Zwischenraum zwischen der Regalaufnahme 9 und der Vertikelsäule 8 in vertikaler Richtung kollisionsfrei verfahren. Dadurch, dass die in Fig. 9 rechts dargestellte Hebeeinrichtung 18 vertikal fluchtend unterhalb der Regalaufnahme 9 angeordnet ist, wird durch das vertikale Verfahren nach oben in-die obere Be-/Entladeposition die leere, unbestückte Kleiderstange 3 aus der entsprechenden Regalaufnahme 9 angehoben (Fig. 10). Das bedeutet, dass nun zwei Hebeeinrichtungen 18 in der oberen Be-/Entladeposition, also oberhalb der Regalaufnahmen 9, und die dritte, in Fig. 10 links dargestellte Hebeeinrichtung 18 in der Transportposition unterhalb der Regalaufnahmen 9 angeordnet sind.

In dieser Anordnung verfährt die Übergabevorrichtung 17 entlang der Übergaberichtung 13 soweit nach links, bis die mittlere Hebeeinrichtung 18, in der die mit Kleidung 4 bestückte Kleiderstange 3 gehalten ist, vertikal fluchtend oberhalb der linken Regalaufnahme 9 des Regals 2 angeordnet ist (Fig. 11). Die Wegstrecke entlang der Übergaberichtung 13 von der Anordnung in Fig. 10 zu der Anordnung in Fig. 11 entspricht der Differenz des Regelaufnahmeabstands a_{R} und dem Hebeeinrichtungsabstand aₕ.

Ausgehend von der vertikal fluchtenden Anordnung in Fig. 11 wird die mittlere Hebeeinrichtung 18 vertikal nach unten eingefahren in die Transportposition (Fig. 12). Durch das vertikale Absenken und der vertikal fluchtenden Anordnung wird die mit Kleidung 4 bestückte Kleiderstange 3 selbsttätig in der der Fahrgasse abgewandten, hinteren, in Fig. 12 links dargestellten Regalaufnahme 9 des Regals 2 abgelegt. Die in Fig. 12 rechts dargestellte Hebeeinrichtung 18 verbleibt in der maximal ausgefahrenen, oberen Be-/Entladeposition, um eine Kollision mit der Kleidung 4 zu vermeiden. Anschließend verfährt die Übergabevorrichtung 17 entlang der Übergaberichtung 13 zurück in Richtung der Fahrgasse.

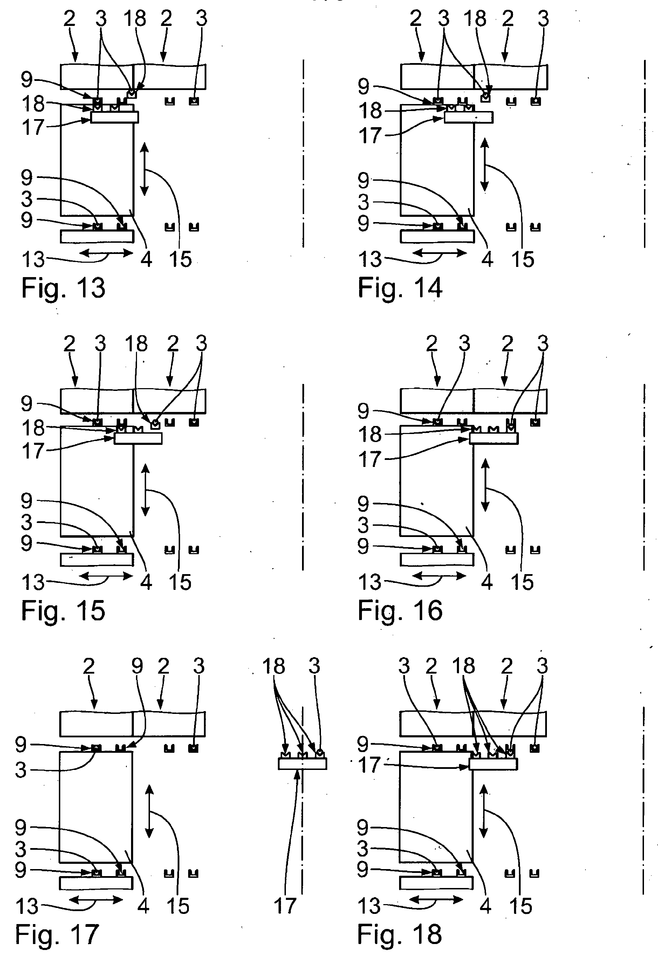

Sobald ein potentieller Kollisionsbereich entlang der Übergaberichtung 13 verlassen wird, kann die die leere Kleiderstange 3 tragende Hebeeinrichtung 18 vertikal entlang der Höhenrichtung 15 abgesenkt und in die untere Transportposition verfahren werden. Gemäß dem gezeigten Ausführungsbeispiel ist die untere Transportposition für die in Fig. 13 bis 16 jeweils rechts dargestellte Hebeeinrichtung 18 spätestens dann erreicht, wenn das der Fahrgasse zugewandte Regal, das in Fig. 16 rechts dargestellt ist, erreicht ist.

Das Absenken der die leere, unbestückte Kleiderstange 3 tragenden Hebeeinrichtung 18 beim Zurückfahren von dem Regal 2 zur Fahrgasse erfolgt gemäß dem gezeigten Ausführungsbeispiel also in einem Bereich zwischen den beiden Regalreihen. Gemäß dem gezeigten Ausführungsbeispiel ist hierbei eine Überlagerung der horizontalen Bewegung der Übergabevorrichtung 17 entlang der Übergaberichtung 13 und der vertikalen Bewegung der Hebeeinrichtung 18 entlang der Höhenrichtung 15 vorgesehen. Die Überlagerung dieser Bewegungsabläufe ist vorteilhaft, da zeiteffektiv. Es ist aus Sicherheitsgründen auch denkbar, zunächst ein Verfahren der Übergabevorrichtung 17 entlang der Übergaberichtung 13 und anschließend, also sequentiell, ein vertikales Verfahren der Hebeeinrichtung 18 entlang der Höhenrichtung 15 zu absolvieren.

Die vollständig zurückgefahrene Anordnung der leeren, unbestückten Übergabevorrichtung 17 ist in Fig. 17 dargestellt. Ausgehend von der Anordnung in Fig. 17 fährt das Regalbediengerät 6 mit der leeren, unbestückten Kleiderstange 3 zurück zur nicht dargestellten Be-/Entladestation und kann dort die leere Kleiderstange 3 auslagern. Gleichzeitig kann eine neue, bestückte Kleiderstange 3 von dem Regalbediengerät 6 aufgenommen und in der vorstehend beschriebenen Weise in das Regal 2 eingelagert werden.

Anhand der Darstellungen in Fig. 17 bis 27 ist ein Ablauf zum Einlagern einer leeren Kleiderstange 3 und gleichzeitiges Entnehmen einer bestückten, auszulagernden Kleiderstange 3 dargestellt. Der in Fig. 17 bis 27 dargestellte Verfahrensablauf entspricht dem vorstehenden, anhand der Fig. 7 bis 17 dargestellten Verfahrensablauf, lediglich in umgekehrter Reihenfolge der Verfahrensschritte.

Wesentlich ist, dass für das Einlagern und Auslagern von Kleiderstangen 3 in das oder aus dem Regal 2 ein vertikales Verfahren der Übergabevorrichtung 17 nicht erforderlich ist, um die Übergabe der Kleiderstangen 3 zu ermöglichen. Die Übergabevorrichtung 17 und insbesondere die Lastaufnahmevorrichtung 16 bleiben vertikal fixiert.

## Patentansprüche

1. Regalbediengerät für ein Regallager (1), wobei das Regalbediengerät (6)
a. entlang einer Transportrichtung (7) verfahrbar ist und
b. eine Lastaufnahmevorrichtung (16) umfasst mit
i. einer entlang einer Übergaberichtung (13) verfahrbaren Übergabevorrichtung (17) zum Übergeben von Kleiderstangen (3) und
ii. mehreren Hebeeinrichtungen (18) zum Heben jeweils einer Kleiderstange (3) von unten,
dadurch gebennzeichnet, daß die Hebeeinrichtungen (18) selbst vertikal verfahrbar an der Übergabevorrichtung (17) angeordnet sind.

2. Regalbediengerät gemäß Anspruch 1, **dadurch gekennzeichnet, dass** die Hebeeinrichtungen (18) unabhängig voneinander, einzeln verfahrbar sind.

3. Regalbediengerät gemäß einem der vorstehenden Ansprüche, **dadurch gekennzeichnet, dass** die Hebeeinrichtungen (18) zwischen einer unteren Transportposition und einer oberen Be-/Entladeposition, insbesondere weggesteuert und/oder kraftgesteuert, verfahrbar sind.

4. Regalbediengerät gemäß einem der vorstehenden Ansprüche, **gekennzeichnet durch** einen, insbesondere elektromotorischen, Hebeantrieb zum Verfahren der Hebeeinrichtung (18).

5. Regalbediengerät gemäß einem der vorstehenden Ansprüche, **dadurch gekennzeichnet, dass** eine Hebeeinrichtung (18) zwei Hebeelemente (22) zum Heben der Kleiderstange (3) jeweils in einem Stangenendbereich aufweist.

6. Regalbediengerät gemäß Anspruch 5, **dadurch gekennzeichnet, dass** die Hebeelemente (22) jeweils eine Hebeaufnahme (23) aufweisen, die insbesondere als V-förmige Vertiefung ausgeführt ist.

7. Regalbediengerät gemäß einem der vorstehenden Ansprüche, **gekennzeichnet durch** einen Übergabeschlitten als Übergabevorrichtung (17) mit einem entlang der Übergaberichtung (13) teleskopierbaren Rahmen (19).

8. Regallager (1) umfassend
a. mindestens ein Regal (2) und
b. ein entlang einer Transportrichtung (7) zu dem Regal (2) hin und von dem Regal (2) weg verfahrbares Regalbediengerät (6) gemäß einem der vorstehenden Ansprüche.

9. Regallager gemäß Anspruch 8, **dadurch gekennzeichnet, dass** ein entlang der Übergaberichtung (13) orientierter Hebeeinrichtungsabstand (a_{H}) zwischen zwei benachbarten Hebeeinrichtungen (18) kleiner ist als ein entlang der Übergaberichtung (13) orientierter Regalaufnahmeabstand (a_{R}) zwischen zwei benachbarten Regalaufnahmen (9) des Regals (2).

10. Regallager gemäß Anspruch 8 oder 9, **dadurch gekennzeichnet, dass** eine entlang der Transportrichtung (7) orientierte Breite (bᵥ) der Übergabevorrichtung (17) größer ist als eine entlang der Transportrichtung (7) orientierte Regalaufnahmebreite (b_{R}) zwischen zwei benachbarten Regalaufnahmen (9) des Regals (2).

11. Regallager gemäß einem der Ansprüche 8 bis 10, **dadurch gekennzeichnet, dass** das Regal (2) zwei entlang der Transportrichtung (7) beabstandete Vertikalsäulen (8) mit jeweils mindestens zwei Regalaufnahmen (9) aufweist, wobei die Regalaufnahmen (9) jeweils entlang der Transportrichtung (7), insbesondere der jeweils anderen Vertikalsäule (8) zugewandt, zu der Vertikalsäule (8) beabstandet angeordnet sind.

12. Regallager gemäß Anspruch 11, **dadurch gekennzeichnet, dass** die Regalaufnahmen (9) an jeweils einem Abstandshebel (10) angeordnet sind.

13. Verfahren zum Ein-/Auslagern von Kleiderstangen in ein bzw. aus einem Regallager (1) gemäß einem der Ansprüche 8 bis 12 umfassend die Verfahrensschritte:
- Verfahren eines mit einer einzulagernden Kleiderstange (3) bestückten Regalbediengeräts (6) gemäß einem der Ansprüche 1 bis 7 entlang einer Transportrichtung (7) in eine Ein-/Auslagerposition an einem Regal (2),
- Verfahren einer mit der einzulagernden Kleiderstange (3) bestückten Übergabevorrichtung (17) entlang einer Übergaberichtung (13) in eine erste Übergabeposition an dem Regal (2),
- vertikales Verfahren von mindestens zwei Hebeeinrichtungen (18), wobei eine der mindestens zwei Hebeeinrichtungen (18) mit der einzulagernden Kleiderstange (3) belegt ist und die andere Hebeeinrichtung (18) zur Aufnahme einer auszulagernden Kleiderstange (3) unbelegt ist,
- Entnehmen der auszulagernden Kleiderstange (3) mit der unbelegten Hebeeinrichtung (18) aus einer ersten Regalaufnahme (9) des Regals (2),
- Ablegen der einzulagernden Kleiderstange (3) mit der belegten Hebeeinrichtung (18) in eine zweite Regalaufnahme (9) des Regals (2),
- Verfahren der mit der auszulagernde Kleiderstange (3) belegten Übergabevorrichtung (17) entlang der Übergaberichtung (13) in die Ein-/Auslagerposition an dem Regal (2),
- Verfahren des mit der auszulagernden Kleiderstange (3) bestückten Regalbediengeräts (6) entlang der Transportrichtung (7).

14. Verfahren nach Anspruch 13, **dadurch gekennzeichnet, dass** nach dem Entnehmen der auszulagernden Kleiderstange (3) aus dem Regal (2) die Übergabevorrichtung (17) entlang der Übergaberichtung (13) in eine zweite Übergabeposition an dem Regal (2) verfährt, sodass die mit der einzulagernden Kleiderstange (3) belegte Hebeeinrichtung (18) mit einer freien Regalaufnahme (9) des Regals (2) vertikal fluchtend angeordnet ist.

15. Verfahren nach Anspruch 13 oder 14, **dadurch gekennzeichnet, dass** das Ablegen der einzulagernden Kleiderstange (3) durch vertikales Absenken der belegten Hebeeinrichtung (18) erfolgt.

## Claims

1. Shelf storage and retrieval system for a shelf warehouse (1), wherein the shelf storage and retrieval system (6)
a. can be moved along a transport direction (7) and
b. comprises a load receiving device (16) with
i. a transfer device (17) that can be moved along a transfer direction (13) to transfer clothes rails (3) and
ii. a plurality of lifting mechanisms (18) for lifting a respective clothes rail (3) from below,
**characterised in that** the lifting mechanisms (18) themselves are arranged on the transfer device (17) in such a way as to be vertically movable.

2. Shelf storage and retrieval system according to claim 1, **characterised in that** the lifting mechanisms (18) can be moved individually, independently of one another.

3. Shelf storage and retrieval system according to any one of the preceding claims, **characterised in that** the lifting mechanisms (18) can be moved, in particular in a path-controlled and/or force-controlled manner, between a lower transport position and an upper loading/unloading position.

4. Shelf storage and retrieval system according to any one of the preceding claims, **characterised by** an, in particular, electric motor lifting drive for moving the lifting mechanism (18).

5. Shelf storage and retrieval system according to any one of the preceding claims, **characterised in that** a lifting mechanism (18) has two lifting elements (22) for lifting the clothes rail (3) in a respective rail end region.

6. Shelf storage and retrieval system according to claim 5, **characterised in that** the lifting elements (22) in each case have a lifting receiver (23), which, in particular, is configured as a V-shaped indentation.

7. Shelf storage and retrieval system according to any one of the preceding claims, **characterised by** a transfer slide as a transfer device (17) with a frame (19) that is telescopic along the transfer direction (13).

8. Shelf warehouse (1) comprising
a. at least one shelf (2) and
b. a shelf storage and retrieval system (6), which can be moved along a transport direction (7) toward the shelf (2) and away from the shelf (2), according to any one of the preceding claims.

9. Shelf warehouse according to claim 8, **characterised in that** a lifting mechanism spacing (a_{H}) oriented along the transfer direction (13) between two adjacent lifting mechanisms (18) is smaller than a shelf receiver spacing (a_{R}) oriented along the transfer direction (13) between two adjacent shelf receivers (9) of the shelf (2).

10. Shelf warehouse according to claim 8 or 9, **characterised in that** a width (b_{V}) of the transfer device (17) oriented along the transport direction (7) is greater than a shelf receiver width (b_{R}) oriented along the transport direction (7) between two adjacent shelf receivers (9) of the shelf (2).

11. Shelf warehouse according to any one of claims 8 to 10, **characterised in that** the shelf (2) has two vertical columns (8) spaced along the transport direction (7) with at least two respective shelf receivers (9), wherein the shelf receivers (9) along the respective transport direction (7), in particular facing the respective other vertical column (8), are arranged spaced apart from the vertical column (8).

12. Shelf warehouse according to claim 11, **characterised in that** the shelf receivers (9) are arranged on a respective spacer lever (10).

13. Method for storing/retrieving clothes rails in or from a shelf warehouse (1) according to any one of claims 8 to 12, comprising the method steps:
- moving a shelf storage and retrieval system (6) equipped with a clothes rail (3) to be stored according to any one of claims 1 to 7 along a transport direction (7) into a storage/retrieval position on a shelf (2),
- moving a transfer device (17) equipped with the clothes rail (3) to be stored along a transfer direction (13) into a first transfer position on the shelf (2),
- vertically moving at least two lifting mechanisms (18), wherein one of the at least two lifting mechanisms (18) is occupied by the clothes rail (3) to be stored and the other lifting mechanism (18) is unoccupied to receive a clothes rail (3) to be retrieved,
- removing the clothes rail (3) to be retrieved with the unoccupied lifting mechanism (18) out of a first shelf receiver (9) of the shelf (2),
- depositing the clothes rail (3) to be stored with the occupied lifting mechanism (18) in a second shelf receiver (9) of the shelf (2),
- moving the transfer device (17) occupied by the clothes rail (3) to be retrieved along the transfer direction (13) into a storage/retrieval position on the shelf (2),
- moving the shelf storage and retrieval system (6) equipped with the clothes rail (3) to be retrieved along the transport direction (7).

14. Method according to claim 13, **characterised in that** once the clothes rail (3) to be retrieved has been removed from the shelf (2), the transfer device (17) moves along the transfer direction (13) into a second transfer position on the shelf (2), so the lifting mechanism (18) occupied by the clothes rail (3) to be stored is arranged vertically aligning with a free shelf receiver (9) of the shelf (2).

15. Method according to claim 13 or 14, **characterised in that** the depositing of the clothes rail (3) to be stored takes place by means of vertically lowering the occupied lifting mechanism (18).

## Revendications

1. Appareil de commande d'étagère pour un rayonnage (1), ledit appareil de commande d'étagère (6)
a. étant déplaçable le long d'une direction de transport (7), et
b. comprenant un dispositif de réception de charge (16) avec
i. un dispositif de transfert (17) déplaçable le long d'une direction de transfert (13) pour le transfert de barres de penderie (3), et
ii. plusieurs dispositifs de levage (18) pour soulever chacun une barre de penderie (3) par le bas,
**caractérisé en ce que** les dispositifs de levage (18) eux-mêmes sont disposés sur le dispositif de transfert (17) de manière à être déplaçables verticalement.

2. Appareil de commande d'étagère selon la revendication 1, **caractérisé en ce que** les dispositifs de levage (18) sont déplaçables individuellement, indépendamment les uns des autres.

3. Appareil de commande d'étagère selon l'une des revendications précédentes, **caractérisé en ce que** les dispositifs de levage (18) sont déplaçables, en particulier par commande de course et/ou de force, entre une position de transport inférieure et une position de chargement/déchargement supérieure.

4. Appareil de commande d'étagère selon l'une des revendications précédentes, **caractérisé par** un entraînement de levage, en particulier à moteur électrique, pour le déplacement du dispositif de levage (18).

5. Appareil de commande d'étagère selon l'une des revendications précédentes, **caractérisé en ce qu'**un dispositif de levage (18) comporte deux éléments de levage (22) pour le levage de la barre de penderie (3) chacun dans une zone d'extrémité de la barre.

6. Appareil de commande d'étagère selon la revendication 5, **caractérisé en ce que** les éléments de levage (22) présentant chacun une réception de levage (23) réalisée en particulier sous forme d'évidement en V.

7. Appareil de commande d'étagère selon l'une des revendications précédentes, **caractérisé par** un chariot de transfert en tant que dispositif de transfert (17) avec un châssis (19) télescopable le long de la direction de transfert (13).

8. Rayonnage (1) comprenant
a. au moins une étagère (2) et
b. un appareil de commande d'étagère (6) selon l'une des revendications précédentes, déplaçable vers l'étagère (2) et déplaçable à distance de l'étagère (2) le long d'une direction de transport (7).

9. Rayonnage selon la revendication 8, **caractérisé en ce qu'**un espacement (a_{H}) de dispositifs de levage entre deux dispositifs de levage (18) voisins le long de la direction de transfert (13) est inférieur à un espacement (a_{R}) entre deux réceptions (9) d'étagère voisines de l'étagère (2) le long de la direction de transfert (13).

10. Rayonnage selon la revendication 8 ou 9, **caractérisé en ce qu'**une largeur (b_{V}) du dispositif de transfert (17) le long de la direction de transport (7) est supérieure à une largeur de réception (b_{R}) d'étagère entre deux réceptions (9) d'étagère voisines de l'étagère (2) le long de la direction de transport (7).

11. Rayonnage selon l'une des revendications 8 à 10, **caractérisé en ce que** l'étagère (2) comporte deux montants (8) espacés le long de la direction de transport (7) avec chacun au moins deux réceptions (9) d'étagère, lesdites réceptions (9) d'étagère étant disposées chacune le long de la direction de transport (7), à distance du montant (8) en particulier en faisant chacune face à l'autre montant (8) respectif.

12. Rayonnage selon la revendication 11, **caractérisé en ce que** les réceptions (9) d'étagère sont disposées chacune sur un bras d'espacement (10).

13. Procédé de chargement/déchargement de barres de penderie dans/hors d'un rayonnage (1) selon l'une des revendications 8 à 12, comprenant les étapes suivantes :
- déplacement d'un appareil de commande d'étagères (6) selon l'une des revendications 1 à 7, équipé d'une barre de penderie (3) à charger, le long d'une direction de transport (7) vers une position de chargement/déchargement sur une étagère (2),
- déplacement d'un dispositif de transfert (17) équipé de la barre de penderie (3) à charger le long d'une direction de transfert (13) vers une première position de transfert sur l'étagère (2),
- déplacement vertical d'au moins deux dispositifs de levage (18), un desdits au moins deux dispositifs de levage (18) étant occupé par la barre de penderie (3) à charger et l'autre dispositif de levage (18) étant libre pour la réception d'une barre de penderie (3) à décharger,
- retrait de la barre de penderie (3) à décharger par le dispositif de levage (18) libre hors d'une première réception (9) de l'étagère (2),
- dépôt de la barre de penderie (3) à charger par le dispositif de levage (18) occupé dans une deuxième réception (9) de l'étagère (2),
- déplacement du dispositif de transfert (17) occupé par la barre de penderie (3) le long de la direction de transfert (13) vers la position de chargement/déchargement sur l'étagère (2),
- déplacement de l'appareil de commande d'étagère (6) équipé de la barre de penderie (3) à décharger le long de la direction de transport (7).

14. Procédé selon la revendication 13, **caractérisé en ce qu'**après retrait de la barre de penderie (3) à décharger hors de l'étagère (2), le dispositif de transfert (17) est déplacé le long de la direction de transfert (13) vers une deuxième position de transfert sur l'étagère (2), si bien que le dispositif de levage (18) occupé par la barre de penderie (3) à charger est disposé en alignement vertical avec une réception (9) libre de l'étagère (2).

15. Procédé selon la revendication 13 ou 14, **caractérisé en ce que** la dépose de la barre de penderie (3) à charger est effectuée par abaissement vertical du dispositif de levage (18) occupé.
